# EUROPEAN PATENT APPLICATION

(11) **EP 2 391 171 A1**
(43) Date of publication of application: **30.11.2011**
(21) Application number: 10733493.0
(22) Date of filing: 20.01.2010
(51) Int. Cl.: H04W 72/08, H04J 1/00, H04W 28/16

(54) **WIRELESS APPARATUS, WIRELESS COMMUNICATION SYSTEM AND WIRELESS COMMUNICATION METHOD**

(30) Priority: 21.01.2009 JP 2009011258
(71) Applicant: NTT DOCOMO, INC., Chiyoda-ku Tokyo 100-6150 (JP)
(72) Inventor: GOTO, Yoshikazu, Tokyo 100-6150 (JP); HAYASHI, Takahiro, Tokyo 100-6150 (JP); HANAKI, Akihito, Tokyo 100-6150 (JP); TOMITA, Morikazu, Tokyo 100-6150 (JP); TAKAGI, Yukiko, Tokyo 100-6150 (JP)
(74) Representative: HOFFMANN EITLE
(86) International application number: PCT/JP2010/050644
(87) International publication number: WO 2010/084886

(57) **Abstract**

Each of a plurality of frequencies defines a combination of at least one uplink from among a plurality of types of uplink radio access, and at least one downlink from among a plurality of types of downlink radio access. A base station (100a) includes an evaluation point calculation unit (150) which calculates the uplink evaluation points for each of the plurality of frequencies based on the uplink parameters contributing to the uplink throughput, and calculates the downlink evaluation points for each of the plurality of frequencies based on the downlink parameters contributing to the downlink throughput, and a selection unit (160) which selects the frequency to be used by the radio terminal of frequency selection target from among the plurality of frequencies, based on the uplink evaluation points and the downlink evaluation points.

## Description

### TECHNICAL FIELD

The present invention relates to a radio apparatus, a radio communication system and a radio communication method for performing communications with a radio terminal by use of any of multiple frequencies.

### BACKGROUND ART

Heretofore, radio communication systems each including base stations and radio network controllers have been known. A base station has a single or multiple cells, and each cell performs radio communications with radio terminals. A radio network controller manages multiple base stations and allocates radio resources to the radio terminals. Note that, such a technique (hereinafter, a "first technique") is sometimes termed as R99 (Release 99) or the like.

In recent years, a technique has been proposed in which a base station performs radio resource allocation or the like for the purpose of improving the throughput, shortening the delay time, or achieving other similar objectives. Note that, such a technique (hereinafter, a "second technique") is sometimes termed as HSDPA (High Speed Downlink Packet Access), HSUPA (High Speed Uplink Packet Access), EUL (Enhanced Uplink) or the like (Non-Patent Documents 1 and 2, for example).

Here, the base station may support multiple frequencies. A case where the base station supports first to third frequencies is illustrated as an example. With the first frequency, a link according to the first technique (R99) can be established in both downlink and uplink directions. With the second frequency, a link according to the first technique (R99) can be established in both downlink and uplink directions, and also a link according to the second technique (HSDPA) can be established in the downlink direction. With the third frequency, a link according to the first technique (R99) can be established in both downlink and uplink directions, and also a link according to the second technique (HSDPA, HSUPA (EUL)) can be established in both the downlink and uplink directions.

### PRIOR ART DOCUMENTS

### NON-PATENT DOCUMENTS

Non-Patent Document 1: 3GPP TS25.308
Non-Patent Document 2: 3GPP TS25.309

### SUMMARY OF THE INVENTION

Here, there are three types of radio terminals. A radio terminal of the first type supports only R99 while a radio terminal of the second type supports R99 and HSDPA, and a radio terminal of the third type supports all of R99, HSDPA and HSUPA (EUL).

A radio terminal of the third type can be expected to achieve more improvement in the throughput when using the third frequency than when using the aforementioned first and second frequencies. However, in a case where a large number of radio terminals of the third type exist, the throughput may be actually reduced if all the radio terminals of the third type use the third frequency.

In this respect, the present invention has been made in view of the aforementioned problem, and an objective of the present invention is to provide a radio apparatus, a radio communication system and a radio communication method which are capable of achieving an improvement in the throughput in a case where multiple frequencies are supported.

A first feature of the radio apparatus is configured to perform communications with a radio terminal by use of any of a plurality of frequencies. Each of a plurality of frequencies defines a combination of at least one uplink from among a plurality of types of uplink radio access, and at least one downlink from among a plurality of types of downlink radio access. The apparatus includes: a calculation unit configured to calculate an uplink evaluation point for each of the plurality of frequencies based on an uplink parameter contributing to an uplink throughput and also to calculate a downlink evaluation point for each of the plurality of frequencies based on a downlink parameter contributing to a downlink throughput; and a selection unit configured to select a frequency to be used by a radio terminal from of frequency selection target among the plurality of frequencies, based on the uplink evaluation points and the downlink evaluation points.

According to the present invention, it is possible to provide a radio apparatus, a radio communication system and a radio communication method which are capable of achieving an improvement in the throughput in a case where multiple frequencies are supported.

### BRIEF DESCRIPTION OF DRAWINGS

[FIG. 1] FIG. 1 is a diagram showing a radio communication system according to a first embodiment.
[FIG. 2] FIG. 2 is a diagram showing a cell 21a according to the first embodiment.
[FIG. 3] FIG. 3 is a diagram showing a cell 21b according to the first embodiment.
[FIG. 4] Fig. 4 is a diagram showing a cell 21c according to the first embodiment.
[FIG. 5] FIG. 5 is a block diagram showing a base station 100 according to the first embodiment.
[FIG. 6] FIG. 6 is a diagram showing an allocatable power according to the first embodiment.
[FIG. 7] FIG. 7 is a diagram showing a table defining relationships between "allocatable powers" and "allocatable throughputs" according to the first embodiment.
[FIG. 8] FIG. 8 is a diagram showing a table for finding an E_Tput_cell according to the first embodiment.
[FIG. 9] FIG. 9 is a diagram showing a table for finding an uplink evaluation point and a downlink evaluation point according to the first embodiment.
[FIG. 10] FIG. 10 is a diagram showing calculation results of uplink evaluation points and downlink evaluation points according to the first embodiment.
[FIG. 11] FIG. 11 is a flowchart showing an operation of the base station 100 according to the first embodiment.
[FIG. 12] FIG. 12 is a diagram showing a table for finding an uplink evaluation point and a downlink evaluation point according to Modification Example 1 of the first embodiment.
[FIG. 13] FIG. 13 is a diagram showing calculation results of uplink evaluation points and downlink evaluation points according to Modification Example 1 of the first embodiment.

### MODE FOR CARRYING OUT THE INVENTION

A radio communication system according to embodiments of the present invention will be described below with reference to the drawings. Note that, in the following description of the drawings, same or similar reference signs denote same or similar elements and portions.

In addition, it should be noted that the drawings are schematic and ratios of dimensions and the like are different from actual ones. Therefore, specific dimensions and the like should be determined in consideration of the following description. Moreover, the drawings also include portions having different dimensional relationships and ratios from each other.

### [Overview of Embodiment]

Hereinafter, an overview of an embodiment will be briefly described. A radio apparatus according to the embodiment performs communications with a radio terminal by use of any of multiple frequencies. A combination of at least one uplink among multiple types of uplink radio accesses and at least one downlink among multiple types of downlink radio accesses is defined by each of the multiple frequencies.

The multiple types of uplink radio accesses include an uplink according to R99 (low speed uplink) and an uplink according to HSUPA (EUL) (high speed uplink), for example. The multiple types of downlink radio accesses include a downlink according to R99 (low speed downlink) and a downlink according to HSDPA (high speed downlink), for example.

The radio apparatus calculates an uplink evaluation point for each of the multiple frequencies based on an uplink parameter contributing to the uplink throughput. Likewise, the radio apparatus calculates a downlink evaluation point for each of the multiple frequencies based on a downlink parameter contributing to the downlink throughput. Note that, the multiple frequencies are the frequencies respectively used in multiple cells. To put it differently, the cells are defined by the frequencies, respectively.

The radio apparatus selects a frequency (cell) to be used by a radio terminal of frequency selection target from among the multiple frequencies (multiple cells), based on the uplink evaluation points and the downlink evaluation points.

As described, the radio apparatus selects the frequency (cell) having an appropriate combination as a combination of the uplink and downlink, while taking both the uplink throughput and downlink throughput into consideration. Accordingly, it is made possible to suppress concentration of the radio terminals to a single frequency (cell) in a case where multiple frequencies (multiple cells) are available.

Note that, a base station is exemplified as the radio apparatus in the embodiment. However, a radio network controller provided at an upper level (core network side) of the base station may be the radio apparatus.

### [First Embodiment]

### (Configuration of Radio Communication System)

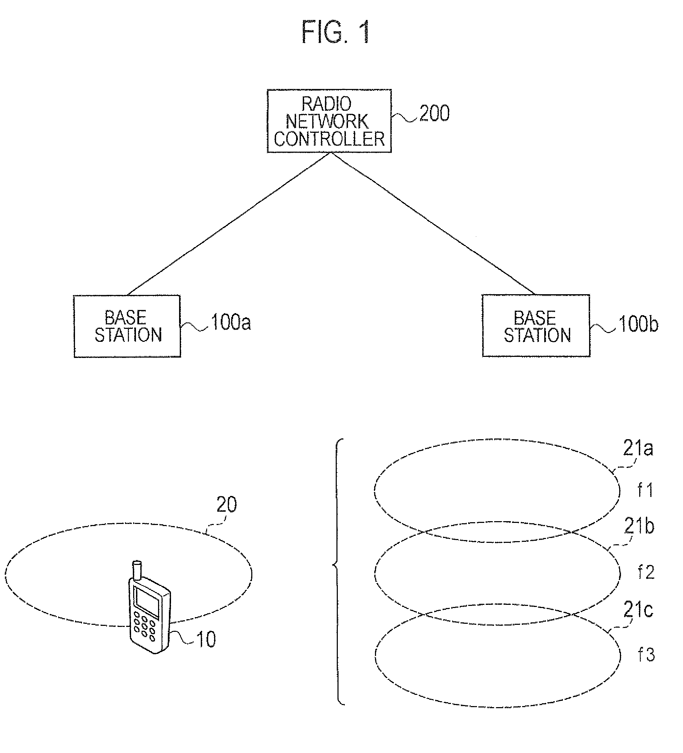

Hereinafter, a description will be given of a configuration of a radio communication system according to a first embodiment with reference to the drawing. FIG. 1 is a diagram showing the radio communication system according to the first embodiment.

As shown in FIG. 1, the radio communication system includes a radio terminal 10, base stations 100 (base station 100a and base station 100b) and a radio network controller 200. Note that, FIG. 1 shows a case where the radio terminal 10 performs communications with the base station 100a.

The radio terminal 10 exists in a sector 20 managed by the base station 100a. The radio terminal 10 performs radio communications with the base station 100a.

Here, multiple cells 21 (cell 21a, cell 21b and cell 21c) are available in the sector 20. In the cell 21a, a frequency f1 is used. In addition, a frequency f2 is used in the cell 21b, and a frequency f3 is used in the cell 21c.

The cell 21a is a cell corresponding to a framework for the radio network controller 200 to perform radio resource allocation or the like. The framework for the radio network controller 200 to perform radio resource allocation or the like is sometimes termed as R99 (Release 99) or the like.

The cell 21b is a cell corresponding to a framework for the radio network controller 200 to perform radio resource allocation or the like. In addition, the cell 21b is a cell corresponding to a framework for each of the base stations 100 to perform downlink radio resource allocation or the like. The framework for each of the base stations 100 to perform downlink radio resource allocation or the like is sometimes termed as HSDPA (High Speed Downlink Packet Access) or the like.

The cell 21c is a cell corresponding to a framework for the radio network controller 200 to perform radio resource allocation or the like. In addition, the cell 21c is a cell corresponding to a framework for each of the base stations 100 to perform downlink radio resource allocation or the like. Moreover, the cell 21c is a cell corresponding to a framework for each of the base stations 100 to perform uplink radio resource allocation or the like. The framework for each of the base stations 100 to perform uplink radio resource allocation or the like is sometimes termed as HSUPA (High Speed Uplink Packet Access), EUL (Enhanced Uplink) or the like.

Hereinafter, the uplink according to R99 is termed as a low speed uplink while the downlink according to R99 is termed as a low speed downlink. In addition, the downlink according to HSDPA is termed as a high speed downlink while the uplink according to HSUPA (EUL) is termed as a high speed uplink.

As described above, each of the cells 21 supports at least one uplink among multiple types of uplink radio accesses and at least one downlink among multiple types of downlink radio accesses. To put it differently, a combination of at least one uplink among the multiple types of uplink radio accesses and at least one downlink among the multiple types of downlink radio accesses is defined by each of the frequencies (frequencies f1 to f3).

Here, it should be noted that a "cell" is basically used as a term indicating a function to communicate with the radio terminal 10. In addition, it should be noted that there is a case where the "cell" is used as a term indicating a sector in which the radio terminal 10 exists.

The base station 100a performs radio communications with the radio terminal 10. The base station 100a manages the sector 20 and performs radio communications with the radio terminal 10 existing in the sector 20, for example. Moreover, the base station 100a has the cells 21a to 21c and performs radio communications with the radio terminal 10 by any of the cells 21. To put it more specifically, the base station 100a performs radio communications with the radio terminal 10 by use of any of the multiple frequencies.

Here, the base station 100a controls radio resource allocation or the like for the high speed uplink or the high speed downlink.

The radio network controller 200 manages the multiple base stations 100. In addition, the radio network controller 200 controls radio resource allocation or the like for the low speed uplink or the low speed downlink. The radio network controller 200 notifies the base station 100 of a parameter indicating a radio resource allocated to the low speed uplink or the low speed downlink, for example. An example of such a parameter is a parameter indicating the transmission speed (32 kbps, 64 kbps, 128 kbps or 384 kbps, for example).

### (Configuration of Cell)

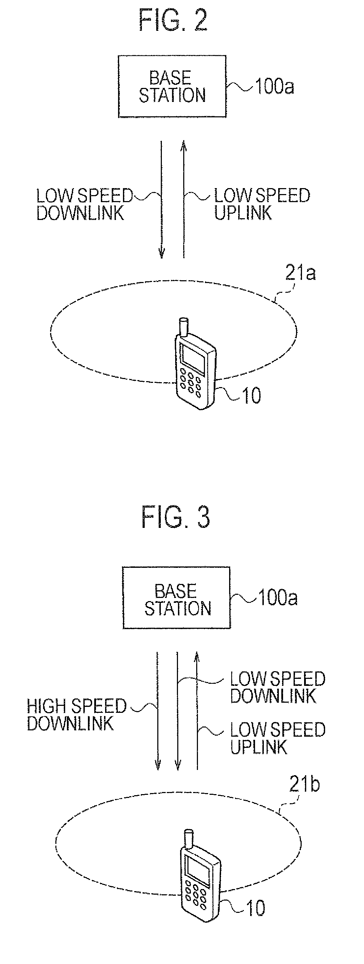

Hereinafter, a description will be given of configurations of the cells according to the first embodiment with reference to the drawings. FIG. 2 to FIG. 4 are diagrams respectively showing the configurations of the cells according to the first embodiment.

First, a description will be given of the aforementioned cell 21a with reference to FIG. 2. As shown in FIG. 2, the cell 21a supports the low speed uplink and the low speed downlink. The base station 100 establishes the low speed uplink and the low speed downlink with the radio terminal 10 connecting to the cell 21a. Note that, the radio network controller 200 allocates the radio resources for the low speed uplink and the low speed downlink. The base station 100 acquires a parameter indicating the radio resource allocated to each of the low speed uplink and the low speed downlink from the radio network controller 200.

The low speed uplink and the low speed downlink correspond to a DPDCH (Dedicated Physical Data Channel), for example. The DPDCH is a channel for transmitting uplink user data or downlink user data.

Second, a description will be given of the aforementioned cell 21b with reference to FIG. 3. As shown in FIG. 3, the cell 21b supports the high speed downlink in addition to the low speed uplink and the low speed downlink. The base station 100 establishes the low speed uplink with the radio terminal 10 connecting to the cell 21b. The base station 100 establishes at least one downlink of the high speed downlink and the low speed downlink with the radio terminal 10 connecting to the cell 21b.

The high speed downlink is an HS-PDSCH (High Speed Physical Downlink Shared Channel), an HS-SCCH (High Speed Shared Control Channel) or the like, for example. The HS-PDSCH is a channel for transmitting downlink user data. The HS-SCCH is a channel for transmitting a parameter of an HS-PDSCH. The parameter of an HS-PDSCH is a value specifying a channelization code for identifying the channel, a value specifying a modulation scheme, or the like, for example.

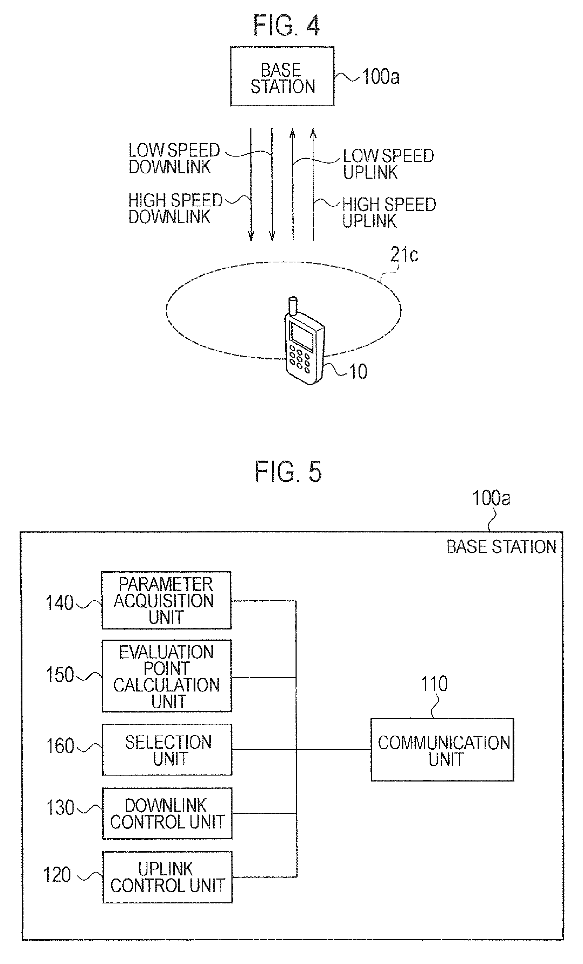

Third, a description will be given of the aforementioned cell 21c with reference to FIG. 4. As shown in FIG. 4, the cell 21c supports the high speed uplink and the high speed downlink in addition to the low speed uplink and the low speed downlink. The base station 100 establishes at least one uplink of the high speed uplink and the low speed uplink with the radio terminal 10 connecting to the cell 21c. The base station 100 establishes at least one downlink of the high speed downlink and the low speed downlink with the radio terminal 10 connecting to the cell 21c.

The high speed uplink corresponds to an E-DPDCH (Enhanced Dedicated Physical Data Channel), for example. The E-DPDCH is a channel for transmitting uplink user data. The transmission power for the uplink user data is controlled by control data (AG; Absolute Grant or RG; Relative Grant) transmitted to the radio terminal 10 from the base station 100 (refer to 3GPP TS25.212 Ver. 7.5.04.10.1A.1 "Information filed mapping of the Absolute Grant Value," and 3GPP TS25.321 Ver. 7.5.09.2.5.2.1 "Relative Grants").

### (Configuration of Base Station)

Hereinafter, a description will be given of a configuration of the base stations according to the first embodiment with reference to the drawing. FIG. 5 is a block diagram showing one of the base stations 100 according to the first embodiment.

As shown in FIG. 5, the base station 100 includes a communication unit 110, an uplink control unit 120, a downlink control unit 130, a parameter acquisition unit 140, an evaluation point calculation unit 150 and a selection unit 160.

The communication unit 110 performs radio communications with the radio terminal 10 connecting to any of the cells 21a to 21c. To be more specific, the communication unit 110 receives uplink user data from the radio terminal 10 via the high speed uplink or the low speed uplink. The communication unit 110 transmits downlink user data to the radio terminal 10 via the high speed downlink or the low speed downlink.

In addition, the communication unit 110 performs communications with the radio network controller 200. To put it more specifically, the communication unit 110 receives a parameter from the radio network controller 200 via an Iub interface or the like, the parameter indicating a radio resource allocated to the low speed uplink or the low speed downlink.

The uplink control unit 120 establishes the low speed uplink or the high speed uplink. The uplink control unit 120 controls the low speed uplink based on the parameter received from the radio network controller 200. In addition, the uplink control unit 120 allocates a radio resource to the high speed uplink and thereby controls the high speed uplink. The uplink control unit 120 performs retransmission control such as HARQ

### (Hybrid Automatic Repeat Request) for the high speed uplink.

The downlink control unit 130 establishes the low speed downlink or the high speed downlink. The downlink control unit 130 controls the low speed downlink based on the parameter received from the radio network controller 200. In addition, the downlink control unit 130 allocates a radio resource to the high speed downlink and thereby controls the high speed downlink. The downlink control unit 130 performs retransmission control such as HARQ for the high speed downlink.

The parameter acquisition unit 140 acquires an uplink parameter contributing to the uplink throughput. In addition, the parameter acquisition unit 140 acquires a downlink parameter contributing to the downlink throughput.

The uplink parameter indicates: whether or not establishment of the high speed link in a predetermined cell is allowed; a power allocatable to the high speed uplink in the predetermined cell; the number of the radio terminals 10 with which the high speed uplinks are already established in the predetermined cell; or a power allocatable a radio terminal 10 of frequency selection target in the predetermined cell, or a throughput allocatable to the radio terminal 10 of frequency selection target in the predetermined cell.

### (1) Whether or Not Establishment of High Speed Uplink Is Allowed

The base station 100a determines whether or not to allow establishment of the high speed uplink. In a case where only a specific frequency corresponds to the high speed uplink, for example, establishment of the high speed uplink is allowed for a frequency within the specific frequency, while establishment of the high speed uplink is not allowed for a frequency outside the specific frequency. In a case where the total reception power exceeds a target reception power, it is possible to determine not to allow establishment of the high speed uplink even for a cell supporting the high speed uplink.

### (2) Power Allocatable to High Speed Uplink

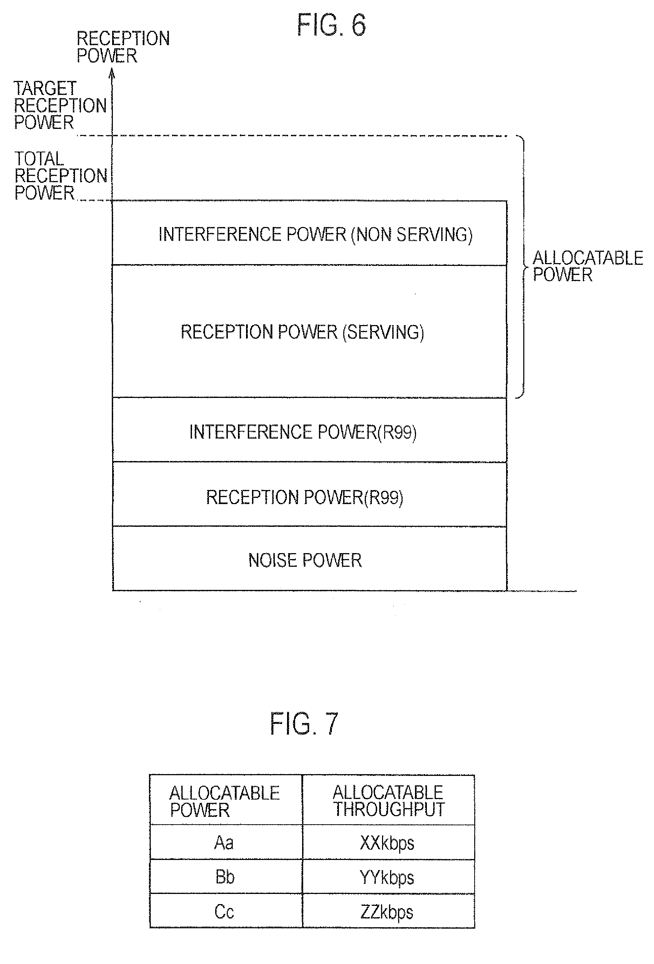

The power allocatable (allocatable power) to the high speed uplink is the power obtained by excluding a noise power, the reception power (R99) and an interference power (R99) from the target reception power (Target RTWP; Target Received Total Wideband Power) as shown in FIG. 6. Alternatively, the power allocatable (allocatable power) to the high speed uplink may be the power obtained by excluding the noise power, the reception power (R99), the interference power (R99) and an interference power (EUL) from the target reception power (Target RTWP). The target reception power (Target RTWP) is an RTWP set as the target in the cell 21.

Note that, the total reception power (RTWP; Received Total Wideband Power) is the total of the noise power, the reception power (R99), the interference power (R99), the reception power (EUL) and the interference power (EUL).

In addition, the interference power (EUL) is the power of a signal received from the radio terminal 10 using a different cell as a serving cell. The base station 100a is capable of controlling the interference power (EUL) to some extent by transmitting control data (RG) to the radio terminal 10 using the different cell as the serving cell.

Note that, the power allocatable (allocatable power) to the high speed uplink is always "0" in a cell not supporting the high speed uplink.

### (3) Number of Radio Terminals 10 with which High Speed Uplink Is Already Established

A terminal counter provided to the base station 100a, for example, manages the number of the radio terminals 10 with which the high speed uplinks are already established. The base station 100a updates the value of the terminal counter in accordance with establishment or release of the high speed uplink.

Note that, the number of the radio terminals 10 with which the high speed uplinks are already established is always "0" in a cell not supporting the high speed uplink.

### (4) Power Allocatable to Radio terminal 10 of frequency selection target

The power allocatable to a radio terminal 10 of frequency selection target is the power obtained by dividing the "power allocatable to the high speed uplink" by "the number of the radio terminals 10 with which the high speed uplinks are already established + 1." Here, "1" indicates the radio terminal 10 of frequency selection target.

Note that, the power allocatable to a radio terminal 10 of frequency selection target is always "0" in a cell not supporting the high speed uplink.

### (5) Throughput Allocatable To Radio terminal 10 of frequency selection target

The throughput allocatable to a radio terminal 10 of frequency selection target in a cell supporting the high speed uplink is determined with reference to the table shown in FIG. 7. As shown in FIG. 7, "powers allocatable to a radio terminal 10 of frequency selection target "and "throughputs allocatable to a radio terminal 10 of frequency selection target " are associated with each other by one-to-one correspondence in the table.

The throughput allocatable to a radio terminal 10 of frequency selection target in a cell not supporting the high speed uplink is determined depending on the radio resource (transmission speed) allocated to the low speed uplink by the radio network controller 200.

The downlink parameter indicates: whether or not establishment of the high speed downlink in a predetermined cell is allowed; a radio quality of each of the multiple frequencies; the power usable in the high speed downlink in the predetermined cell; and the number of codes usable in the high speed downlink in the predetermined cell; the number of the radio terminals 10 with which the high speed downlinks are already established in the predetermined cell; or the throughput allocatable to a radio terminal 10 of frequency selection target in the predetermined cell.

### (1) Whether or Not Establishment of High Speed Downlink Is Allowed

The base station 100a determines whether or not to allow establishment of the high speed downlink. In a case where only a specific frequency supports the high speed downlink, for example, establishment of the high speed downlink is allowed for a frequency within the specific frequency, while establishment of the high speed downlink is not allowed for a frequency outside the specific frequency. In a case where the total reception power exceeds the target reception power, it is possible to determine not to allow establishment of the high speed downlink even for a cell supporting the high speed downlink.

### (2)Radio Quality

The radio quality of each of the multiple frequencies is measured by the radio terminal 10 and is reported to the base station 100a from the radio terminal 10. The timing at which the radio terminal 10 reports the radio quality to the base station 100a is optional. The radio quality is periodically reported, for example.

The radio quality is a CQI (Channel Quality Indicator), an Ec/No of a CPICH (common Pilot Channel), an RSCP (Received Signal Code Power) of a CPICH or the like, for example.

### (3) Power Usable in High Speed Downlink

The power usable in the high speed downlink "P_{HS-PDSCH}" is expressed by the following formula, for example. To be more specific, "P_{HS-PDSCH}" is expressed by "P_{HS-PDSCH}" = "P_{TOTAL}" - "P_{non-HS}" - ("N_{HSSCCH"} × "P_{HSSCCH}") Note that, "P_{TOTAL}" is the upper limit value of the power allocated to the high speed downlink radio (HS). "Pnon-Hs" is the total transmission power (measurement value) of the channels other than the HS-SCCH and HS-PDSCH. "N_{HSSCCH}" is the number of the HS-SCCHs. "P_{HSSCCH}" is the transmission power of the HS-SCCH.

Note that, the power usable in the high speed downlink is always "0" in a cell not supporting the high speed downlink.

### (4) Number of Codes Usable in High Speed Downlink

The number of codes usable in the high speed downlink is the smallest number of codes among "the number of codes which is obtained by subtracting the number of codes in use except for an HS-SCCH and HS related code from the total number of codes (the number of codes allocatable to the HS-PDSCH in the cell 21)" and "the largest number of multiple codes of HS-DPSCH associated with the category of a radio terminal 10 of frequency selection target."

Note that, the number of codes usable in the high speed downlink is always "0" in a cell not supporting the high speed downlink.

### (5) Number of Radio Terminals 10 with which High Speed downlink Is Already Established

A terminal counter provided to the base station 100a, for example, manages the number of the radio terminals 10 with which the high speed downlinks are already established. The base station 100a updates the value of the terminal counter in accordance with establishment or release of the high speed downlink.

Note that, the number of the radio terminals 10 with which the high speed downlinks are already established is always "0" in a cell not supporting the high speed downlink.

### (6) Throughput Allocatable to Radio terminal 10 of frequency selection target

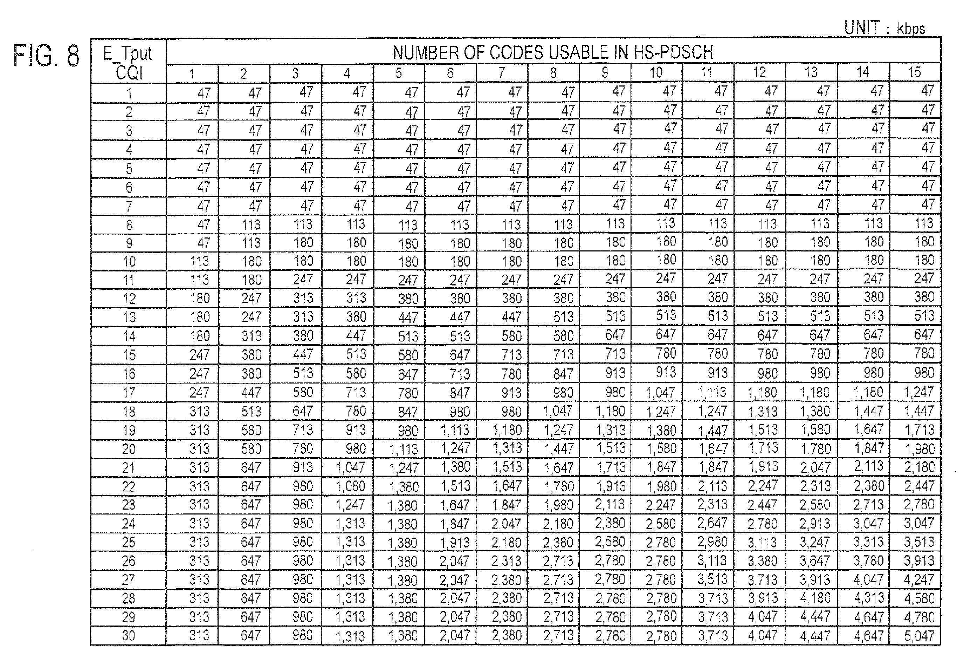

The throughput allocatable to a radio terminal 10 of frequency selection target is found by the following manner in a cell supporting the high speed downlink. Note that, as shown in FIG. 8, the base station 100 has a table defining an "E_Tput_cell" by an "E_Tput CQI" and "the number of codes usable in HS-PDSCH." The "E_Tput_ceir is the transmission rate of HSDPA. Here, "the number of codes usable in HS-PDSCH" is synonymous with "the number of codes usable in the high speed downlink" described above.

To put it more specifically, the base station 100a calculates an "E_Tput CQI" based on the "power usable in the high speed downlink." To be more specific, the "E_Tput CQI" is calculated by the formula shown below. Note that, the result of the calculation is converted into an integer by rounding off.

"E_Tput CQI" = +3 + 10 × log10 [power usable in high speed downlink]
Subsequently, the base station 100a acquires the "E_Tput_cell" defined by the "E_Tput CQI" and "the number of codes usable in HS-PDSCH" with reference to the table shown in FIG. 8.

Lastly, the base station 100a divides the "E_Tput_cell" by "the number of the radio terminals 10 with which the high speed downlinks are already established + 1," Note that, "1" indicates the radio terminal 10 of frequency selection target. The throughput allocatable to the radio terminal 10 of frequency selection target in a cell supporting the high speed downlink is the result of the division.

The throughput allocatable to a radio terminal 10 of frequency selection target in a cell not supporting the high speed downlink is determined depending on the radio resource (transmission speed) allocated to the low speed uplink by the radio network controller 200.

The evaluation point calculation unit 150 calculates an uplink evaluation point for each of the cells 21 based on an uplink parameter contributing to the uplink throughput. In addition, the evaluation point calculation unit 150 calculates a downlink evaluation point for each of the cells 21 based on a downlink parameter contributing to the downlink throughput.

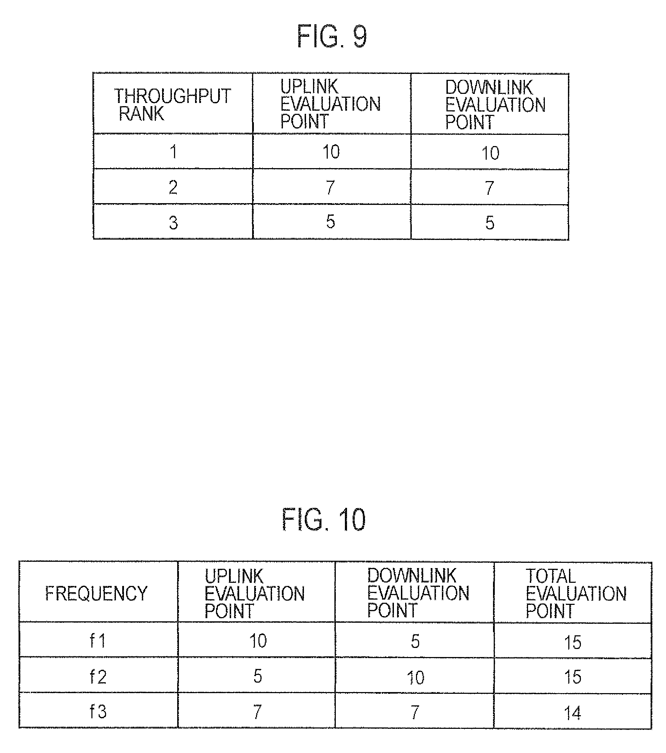

The evaluation point calculation unit 150 has a table associating throughput ranks, uplink evaluation points and downlink evaluation points as shown in FIG. 9, for example. Here, the throughput ranks are values obtained by ranking the cells 21 (frequencies) by comparing the uplink parameters and the downlink parameters for the respective cells 21 with each other. It should be noted that there is a case where the throughput rank of the uplink parameter of a certain cell 21 is different from the throughput rank of the downlink parameter thereof.

Here, each of the throughput ranks indicates the size of the throughput. In the table shown in FIG. 9, the smaller the value of the throughput rank, the larger the throughput and the higher the uplink evaluation point and the downlink evaluation point.

The selection unit 160 selects the cell 21 (frequency) to be used by the radio terminal 10 of frequency selection target from among the multiple cells 21 (multiple frequencies), based on the uplink evaluation points and the downlink evaluation points. To be more specific, the selection unit 160 selects the cell 21 whose total value of the uplink evaluation point and the downlink evaluation point is high as the cell 21 to be used by the radio terminal 10 of frequency selection target.

A description will be given of a case where the uplink evaluation points and the downlink evaluation points of the cells 21 (frequencies f1 to f3) result in the values shown in FIG. 10, for example. To put it more specifically, the throughput ranks are high in the order of the cell 21a (frequency f1), the cell 21c (frequency f3) and the cell 21b (frequency f2) for the uplink. Meanwhile, the throughput ranks are high in the order of the cell 21b (frequency f2), the cell 21c (frequency f3) and the cell 21a (frequency f1) for the downlink.

As shown in FIG. 10, the total evaluation points of the cell 21a (frequency f1) and the cell 21b (frequency f2) are each higher than the total evaluation point of the cell 21c (frequency f3). Accordingly, the selection unit 160 selects the cell 21a (frequency f1) or the cell 21b (frequency f2) as the frequency to be used by the radio terminal 10 of frequency selection target.

### (Operation of Base Station)

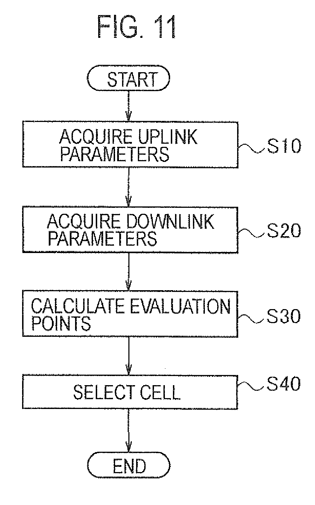

Hereinafter, a description will be given of an operation of the base station according to the first embodiment with reference to the drawing. FIG. 11 is a flowchart showing the operation of the base station 100a according to the first embodiment.

Note that, FIG. 11 shows processing to be executed at the timing when cell selection is determined to be necessary. The timing when cell selection is determined to be necessary is, for example, the timing when the radio terminal 10 originates a call, the timing when the radio terminal 10 transitions to a downlink FACH state or an uplink RACH state and the timing when the radio terminal 10 transitions to a state where the radio terminal 10 uses the high speed uplink and the high speed downlink.

In addition, the timing when cell selection is determined to be necessary is the timing when a change in the traffic amount of the radio terminal 10 becomes large and the timing when the usable radio access changes due to movement of the radio terminal 10. For the change in the traffic amount of the radio terminal 10, the radio terminal 10 needing a low speed rate is made to use a low speed link radio access, and the radio terminal 10 needing a high speed rate is made to use a high speed link radio access, for example.

Moreover, the timing when cell selection is determined to be necessary is the timing when the communication state changes. Such timing is, for example, the timing when the radio terminal 10 transitions from an idle state to a communication state or the timing when the radio terminal 10 transitions from the communication state to the idle state.

As shown in FIG. 11, the base station 100a acquires uplink parameters contributing to the uplink throughput in step 10.

The base station 100a acquires downlink parameters contributing to the downlink throughput in step 20.

In step 30, the base station 100a calculates uplink evaluation points and downlink evaluation points based on the uplink parameters and the downlink parameters. As described above, the base station 100a compares the uplink parameters and the downlink parameters for the respective cells 21 (frequencies) and then acquires throughput ranks obtained by ranking the cells 21 (frequencies). The base station 100a calculates the uplink evaluation points and the downlink evaluation points based on the throughput ranks and then calculates the total evaluation points of the uplink parameters and the downlink parameters for the respective cells 21 (frequencies).

In step 40, the base station 100a selects the cell 21 (frequency) to be used by the radio terminal 10 of frequency selection target from among the multiple cells 21 (multiple frequencies), based on the uplink evaluation points and the downlink evaluation points.

### (Advantageous effects)

In the first embodiment, the base station 100a calculates the uplink evaluation point for each of the multiple cells 21 based on the uplink parameter contributing to the uplink throughput and also calculates the downlink evaluation point for each of the multiple cells 21 based on the downlink parameter contributing to the downlink throughput. Subsequently, the base station 100a selects the cell 21 (frequency) to be used by the radio terminal 10 of frequency selection target from among the multiple cells 21 (multiple frequencies), based on the uplink evaluation points and the downlink evaluation points.

As described above, the base station 100a selects the cell 21 (frequency) having an appropriate combination as a combination of the uplink and downlink, while taking both the uplink throughput and downlink throughput into consideration. Accordingly, it is made possible to suppress concentration of the radio terminals 10 to a single cell 21 (frequency) in a case where multiple cells 21 (multiple frequencies) are available. In addition, an increase in the throughput in the uplink or downlink can be achieved.

### [Modification Example 1]

Hereinafter, a description will be given of Modification Example 1 of the first embodiment. Differences from the first embodiment will be mainly described below.

In Modification Example 1, the uplink evaluation points are each weighted by an uplink weight value. In addition, the downlink evaluation points are each weighted by a downlink weight value.

To be more specific, the aforementioned evaluation point calculation unit 150 calculates the uplink evaluation points based on the uplink weight value. Likewise, the evaluation point calculation unit 150 calculates the downlink evaluation points based on the downlink weight value.

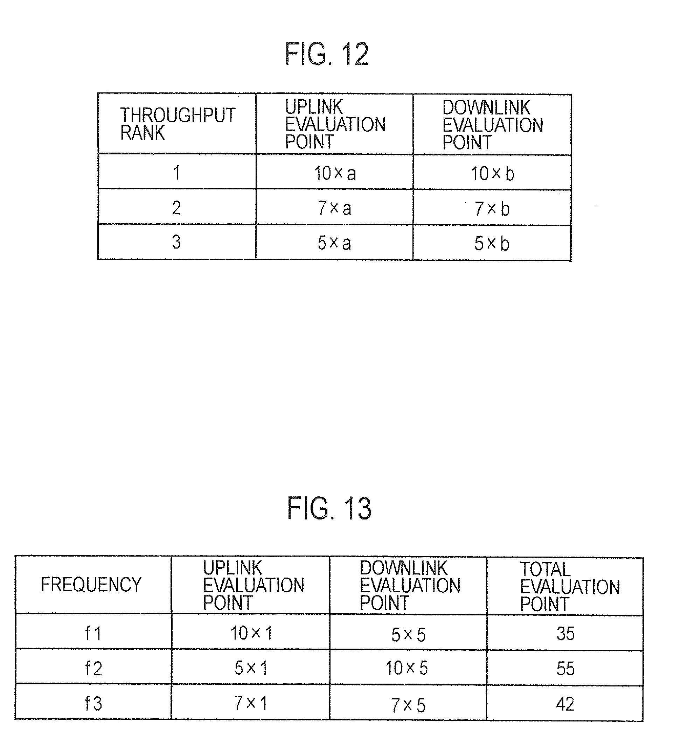

As shown in FIG. 12, for example, the uplink evaluation points are each weighted by the uplink weight value "a." Meanwhile, the downlink evaluation points are each weighted by the downlink weight value "b."

Here, it is preferred that the relationship "a < b" hold true. To put it more specifically, the weight of the downlink weight value is larger than the weight of the uplink weight value.

A description will be given of a case where the results shown in FIG. 10 are weighted by the uplink weight value and downlink weight value and result in the values shown in FIG. 13. Here, the uplink weight value "a" is "1" whereas the downlink weight value "b" is "5."

As shown in FIG. 13, the total evaluation point of the cell 21b (frequency f2) is higher than each of the total evaluation points of the cell 21a (frequency f1) and the cell 21c (frequency f3). Accordingly, the selection unit 160 selects the cell 21b (frequency f2) as the frequency to be used by the radio terminal 10 of frequency selection target.

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

In this embodiment, the parameter acquisition unit 140, the evaluation point calculation unit 150 and the selection unit 160 are provided to the base station 100a, but the embodiment is not limited to this configuration. The parameter acquisition unit 140, the evaluation point calculation unit 150 and the selection unit 160 may be provided to another apparatus provided in the radio communication system. In addition, the parameter acquisition unit 140, the evaluation point calculation unit 150 and the selection unit 160 may be provided separately to multiple apparatuses provided in the radio communication system.

Note that the entire content of Japanese Patent Application No. 2009-011258 (filed on January 21, 2009) is incorporated herein by reference.

### INDUSTRIAL APPLICABILITY

As described above, with the radio apparatus, the radio communication system and the radio communication method according to the present invention, it is possible to provide the radio apparatus, the radio communication system and the radio communication method with which an improvement in the throughput can be achieved in a case where multiple frequencies are supported.

## Claims

1. A radio apparatus configured to perform communications with a radio terminal by use of any of a plurality of frequencies, wherein
each of a plurality of frequencies defines a combination of at least one uplink from among a plurality of types of uplink radio access, and at least one downlink from among a plurality of types of downlink radio access,
the apparatus comprising:
a calculation unit configured to calculate an uplink evaluation point for each of the plurality of frequencies based on an uplink parameter contributing to an uplink throughput and also to calculate a downlink evaluation point for each of the plurality of frequencies based on a downlink parameter contributing to a downlink throughput; and
a selection unit configured to select a frequency to be used by a radio terminal from of frequency selection target among the plurality of frequencies, based on the uplink evaluation points and the downlink evaluation points.

2. The radio apparatus according to claim 1, wherein
the calculation unit calculates the uplink evaluation points based on an uplink weight value and the downlink evaluation points based on a downlink weight value, and
a weight of the downlink weight value is larger than a weight of the uplink weight value.

3. The radio apparatus according to claim 1, wherein
the plurality of types of uplink radio accesses include a low speed uplink and a high speed uplink, and
the uplink parameter indicates: whether or not establishment of the high speed uplink in a cell defined by a predetermined frequency is allowed;
a power allocatable to the high speed uplink in the cell defined by the predetermined frequency; or the number of radio terminals with which the high speed uplinks are already established in the cell defined by the predetermined frequency.

4. The radio apparatus according to claim 1, wherein
the plurality of types of downlink radio accesses include a low speed downlink and a high speed downlink, and
the downlink parameter indicates: whether or not establishment of the high speed downlink in a cell defined by a predetermined frequency is allowed; a radio quality of each of the plurality of frequencies; a power usable in the high speed downlink in a cell defined by the predetermined frequency; the number of codes usable in the high speed downlink in a cell defined by the predetermined frequency; or the number of radio terminals with which the high speed downlinks are already established in a cell defined by the predetermined frequency.

5. A radio communication system configured to perform communications with a radio terminal by use of any of a plurality of frequencies, wherein
each of a plurality of frequencies defines a combination of at least one uplink from among a plurality of types of uplink radio access, and at least one downlink from among a plurality of types of downlink radio access,
the system comprising:
a calculation unit configured to calculate an uplink evaluation point for each of the plurality of frequencies based on an uplink parameter contributing to an uplink throughput and also to calculate a downlink evaluation point for each of the plurality of frequencies based on a downlink parameter contributing to a downlink throughput; and
a selection unit configured to select a frequency to be used by a radio terminal of frequency selection target from among the plurality of frequencies, based on the uplink evaluation points and the downlink evaluation points.

6. A radio communication method for performing communications with a radio terminal by use of any of a plurality of frequencies, wherein
each of a plurality of frequencies defines a combination of at least one uplink from among a plurality of types of uplink radio access, and at least one downlink from among a plurality of types of downlink radio access,
the method comprising the steps of:
calculating an uplink evaluation point for each of the plurality of frequencies based on an uplink parameter contributing to an uplink throughput and also calculating a downlink evaluation point for each of the plurality of frequencies based on a downlink parameter contributing to a downlink throughput; and
selecting a frequency to be used by a radio terminal of frequency selection target from among the plurality of frequencies, based on the uplink evaluation points and the downlink evaluation points.
